# EUROPÄISCHE PATENTSCHRIFT

(11) **EP 2 551 145 B1**
(45) Veröffentlichungstag und Bekanntmachung des Hinweises auf die Patenterteilung: **08.11.2017**
(21) Anmeldenummer: 12175139.0
(22) Anmeldetag: 05.07.2012
(51) Int. Cl.: H02J 7/00

(54) **Mobile Ladestation für Elektrofahrzeuge und Ladesystem**
Mobile charging station for electric vehicles and charging system
Station de chargement mobile pour véhicules électriques et système de charge

(30) Priorität: 27.07.2011 DE 102011079870
(43) Veröffentlichungstag der Anmeldung: 30.01.2013
(73) Patentinhaber: Ruland, Christoph, 57076 Siegen (DE)
(72) Erfinder: Ruland, Christoph, 57076 Siegen (DE)
(74) Vertreter: Richardt Patentanwälte PartG mbB

(56) Entgegenhaltungen:
- EP-A2- 2 332 772
- JP-A- H1 056 703
- US-A- 5 323 099
- US-A1- 2010 102 775
- US-A1- 2011 074 351

## Beschreibung

Die Erfindung betrifft eine mobile Ladestation für Elektrofahrzeuge sowie ein Ladesystem für mehrere Elektrofahrzeuge und einen Parkplatz,

Aus dem Stand der Technik sind verschiedene Ladestationen für Elektrofahrzeuge bekannt, insbesondere aus DE 195 20 603 C1, DE 10 2009 024 721 A1,
US 5,451,755, DE 10 2009 035 626 A1, US 2011/0074351 A1 und
JP 1998-05 67 03 A.

Stationäre Ladestationen für Elektrofahrzeuge sind ferner kommerziell von der Firma Mennekes Elektrotechnik GmbH & Co. KG, 57399 Kirchhundem (www.mennekes.de) erhältlich. Solche Ladestationen können verschiedene Funktionalitäten beinhalten, insbesondere die Steuerung des Ladevorgangs, die Kommunikation mit dem Energieversorgungs-Provider, dem Ladestation-Betreiber und dem Elektrofahrzeug, eine Bezahlfunktion, Schutzvorrichtungen, insbesondere zum Schutz vor Überlast, Phasen/Stromstärkeauswahl und dergleichen. Insbesondere kann die Ladestation entsprechend WO 2010/145971 A1 ausgebildet sein.

Aus US 2010/0102775 A1 ist eine Teleskoparmvorrichtung mit einem Teleskoparm für jedes zu ladendes Elektrofahrzeug bekannt, wobei ein Kabel aus jedem der Teleskoparme herausgezogen werden kann und die Teleskoparmvorrichtung entlang Schienen mit einem motorischen Antrieb verfahrbar ist.

Aus US 6,338,450 B1 ist ein Kabelmanager bekannt, der an einer Gebäudedecke fest installiert ist.

Aus US 3,105,929 ist ebenfalls ein fest installiertes Ladesystem bekannt.

Aus US 2011/0169447 A1 ist eine tragbare Kabeltrommel zum Laden von Elektrofahrzeugen bekannt.

Aus US 5,323,099 A ist ein an der Decke verschiebbar angebrachtes Ladesystem für Elektrofahrzeuge bekannt.

Aus der EP 2 332 772 A2 ist automatisiertes Aufladestationensystem zum Verbinden von Elektrofahrzeug-Energiequellen mit einer zentralen Energiequelle bekannt.

Ein gemeinsamer Nachteil vorbekannter Ladestationen für Elektrofahrzeuge ist deren mangelnde Flexibilität und Skalierbarkeit in Abhängigkeit von der Anzahl von Elektrofahrzeugen in einer Fahrzeugflotte.

Der Erfindung liegt die Aufgabe zugrunde, eine verbesserte mobile Ladestation für Elektrofahrzeuge und ein verbessertes Ladesystem für mehrere Elektrofahrzeuge zu schaffen.

Die der Erfindung zugrunde liegenden Aufgaben werden jeweils mit den Merkmalen der unabhängigen Patentansprüche gelöst. Ausführungsformen der Erfindung sind in den abhängigen Patentansprüchen angegeben.

Ausführungsformen der Erfindung sind besonders vorteilhaft, da es die mobile Ausführung der Ladestation ermöglicht, flexibel auf den aktuellen Bedarf zur Aufladung der Batterien von Elektrofahrzeugen zu reagieren. Beispielsweise kann in einem Parkhaus oder auf einem Parkplatz eine Anzahl der mobilen Ladestationen zur Verfügung gestellt werden, die dann je nach Bedarf an die jeweiligen Elektrofahrzeuge von einem Benutzer transportiert werden können.

Unter einem "Elektrofahrzeug" werden erfindungsgemäß beispielsweise Landfahrzeuge, insbesondere Kraftfahrzeuge, beispielsweise Personenkraftwagen (Pkw), mit Elektroantrieb sowie Wasserfahrzeuge, insbesondere Schiffe, Jachten und Sportboote mit Elektroantrieb verstanden.

Unter einem "Parkplatz" wird dementsprechend ein Abstellplatz für ein Elektrofahrzeug verstanden, beispielsweise ein Parkplatz oder Stellplatz in einer Garage oder unter freiem Himmel für einen PkW,ein Liegeplatz oder eine Anlegestelle für ein Wasserfahrzeug, ein Autoreisezug, Autofähre oder Autokino. Insbesondere kann der "Parkplatz" im öffentlichen, gewerblichen oder privaten Bereich sein, beispielsweise auch in einer Doppelgarage eines Privathauses, die mit einer mobilen Ladestation bzw. einem Ladesystem ausgerüstet ist.

Von besonderem Vorteil ist hierbei, dass zum Beispiel auf einem Parkplatz oder einem Parkhaus keine festgelegte Anzahl und Positionierung für Parkplätze für Elektrofahrzeuge vorgesehen sein müssen, an denen jeweils das Aufladen der Batterie ermöglicht ist. Dies hat den weiteren besonderen Vorteil, dass eine mobile Ladestation von einem der Elektrofahrzeuge zu einem anderen der Elektrofahrzeuge transportiert werden kann, nachdem der Ladevorgang abgeschlossen ist, wobei das aufgeladene Elektrofahrzeug auf seinem Parkplatz verbleiben kann, ohne die mobile Ladestation für eine nachfolgende Verwendung zum Aufladen eines anderen Elektrofahrzeugs zu blockieren. Dies ist besonders vorteilhaft in einen Flughafenparkhaus, da die Parkdauer dort oft mehr als einen Tag oder mehrere Tage beträgt.

Nach einer Ausführungsform der Erfindung sind die Transportmittel der mobilen Ladestation zum Einhängen an eine über Kopf, z.B. in einer Höhe von mindestens 180 cm, angeordnete Transportschiene ausgebildet. Dies ermöglicht es, die mobile Ladestation entlang der Transportschiene bequem zu dem jeweiligen Parkplatz zu bewegen, auf dem ein Elektrofahrzeug geparkt ist, dessen Batterie aufgeladen werden soll. Falls sämtliche der an die Transportschiene gehängten mobilen Ladestationen belegt sind, kann aus einem Magazin eine weitere mobile Ladestation entnommen werden, um sie in die Transportschiene einzuhängen.

Es können auch mehrere Transportschienen vorhanden sein, an die jeweils mehrere mobile Ladestationen gehängt sind. Wenn eine mobile Ladestation, die an einer ersten der Stromschiene gehängt ist, gerade nicht belegt ist, so kann sie aus dieser ersten Transportschiene ausgehängt und zu einer zweiten Transportschiene getragen werden, um sie dort einzuhängen und dann für die Aufladung eines Elektrofahrzeugs zu verwenden.

Nach einer Ausführungsform der Erfindung sind neben der Transportschiene ein oder mehrere Stromschienen angeordnet. Die mobile Ladestation hat ein elektrisches Kontaktelement zum Abgriff der Ladespannung von einer oder mehreren der Stromschienen.

Nach einer Ausführungsform der Erfindung ist die Transportschiene als Stromschiene, insbesondere als offene Stromschiene oder Schleifleitung, ausgebildet, sodass separate Stromschienen nicht erforderlich sind. An den Transportmitteln kann ein elektrisches Kontaktelement angeordnet sein, welches die Transportschiene kontaktiert, wenn die mobile Ladestation an die Transportschiene gehängt ist, um die Versorgungsspannung dort abzugreifen. Beispielsweise ist die mobile Ladestation pendelförmig ausgebildet und hat an einem Vorsprung eine Transportrolle, welche in die Stromschiene eingehängt wird. Die Transportrolle ist als elektrisches Kontaktelement ausgebildet, um elektrisch mit der Transportschiene zu kontaktieren. Nach weiteren Ausführungsformen der Erfindung ist die Transportschiene als Rollenschiene ausgebildet, d.h. mehrere der Rollen sind hintereinander entlang der Transportschiene angeordnet, so dass die mobile Ladestation über die Rollen verschoben werden kann. Nach weiteren Ausführungsformen der Erfindung hat die Transportschiene und/oder die mobile Ladestation ein oder mehrere Gleit- oder Schleifelemente, die an der Transportschiene und/oder an dem Ende des Vorsprungs der mobilen Ladestation, mit dem die mobilen Ladestation in der Transportschiene eingehängt ist, angeordnet sein können. Insbesondere kann das elektrische Kontaktelement als Schleifkontakt ausgebildet sein. Zur Führung des an der Transportschiene eingehängten Vorsprungs entlang der Transportschiene kann eine Kulissenführung, eine Führungsrille oder ein anderes Führungselement vorgesehen sein.

Nach einer Ausführungsform der Erfindung hat die mobile Ladestation ein Gewicht von höchstens 10 kg, insbesondere höchstens 5 kg, sodass die mobile Ladestation bequem von einem Benutzer oder robotisch von einem Magazin zu der Transportschiene oder von einer ersten Transportschiene zu einer zweiten Transportschiene getragen bzw. transportiert werden kann.

Nach einer weiteren Ausführungsform der Erfindung ist die mobile Ladestation auf einem Wagen oder einem Karren zum Ziehen oder Schieben durch einen Benutzer oder einen Roboter montiert, um so die Flexibilität und Skalierbarkeit zu erreichen.

Nach einer Ausführungsform der Erfindung ist die Stromschiene am Boden montiert oder in den Boden eingelassen, so dass eine mobile Ladestation, die als Wagen oder Karren ausgebildet ist, über diese Stromschiene mit der elektrischen Energieversorgung verbunden werden kann. Insbesondere kann die Stromschiene zur Führung der mobilen Ladestation entlang des Bodens ausgebildet sein. Nach einer Ausführungsform der Erfindung ist zum Beispiel eine Transportschiene mit einer parallel dazu verlegten Stromschiene oder zwei oder mehrere parallele Stromschienen vorgesehen, auf denen die mobile Ladestation verfahren werden kann. Insbesondere kann die mobile Ladestation in diesem Fall als z.B. handbetätigbares oder robotisches Schienenfahrzeug mit oder ohne eigenem Antrieb ausgebildet sein.

Nach einer Ausführungsform der Erfindung sind die Abstellplätze in dem Parkplatz in zumindest zwei aufeinanderstoßenden Reihen angeordnet. Die Transportschiene bzw. die Stromschiene ist dann vorzugsweise zwischen diesen beiden aufeinanderstoßenden Reihen angeordnet, insbesondere mittig am Boden, auf halber Höhe, über Kopf, insbesondere an der Decke, so dass auf den Abstellplätzen beider Reihen abgestellte Elektrofahrzeuge durch Verfahren der mobilen Ladestation erreicht werden können. Dies reduziert den Installationsaufwand erheblich. Insbesondere kann die Transportschiene bzw. die Stromschiene zwischen den Stützsäulen eines Parkhauses angeordnet und daran befestigt sein.

Nach einer Ausführungsform der Erfindung ist eine mobile Ladestation des Ladesystems pendelförmig ausgebildet, wobei die Pendelmasse hauptsächlich durch die in dem Gehäuse der Ladestation angeordnete Kabeltrommel gebildet wird. Vorzugsweise verläuft die Drehachse der Kabeltrommel in etwa durch den Schwerpunkt der Ladestation, sodass beim Herausziehen des Kabels aus der Unterseite des Gehäuses kein oder nur ein geringes Drehmoment auf die Ladestation wirkt. Besonders vorteilhaft ist dabei die Anordnung der Kabelaustrittsöffnung an der Unterseite des Gehäuses unterhalb der Drehachse der Kabeltrommel, sodass die mobile Ladestation, wenn sie an der Transportschiene aufgehängt ist, nicht anfängt unkontrolliert zu pendeln, wenn ein Benutzer das Kabel aus der Unterseite des Gehäuses herauszieht, um es mit einem Elektrofahrzeug zu verbinden.

In einem weiteren Aspekt betrifft die Erfindung ein Verfahren zum Laden von Elektrofahrzeugen gemäß Patentanspruch 14. Besonders vorteilhaft ist dabei die maximale Flexibilität, bei bequemer Handhabung und äußerst effizienter Nutzung der zur Verfügung stehenden mobilen Ladestationen.

Wenn beispielsweise auf einem Parkplatz nur zwei der mobilen Ladestationen zur Verfügung stehen, die jeweils mit Elektrofahrzeugen verbunden sind, und der Ladevorgang eines dieser Elektrofahrzeuge bereits abgeschlossen ist, so kann ein drittes auf dem Parkplatz abgestelltes Elektrofahrzeug dennoch geladen werden. Hierzu wird die Einspeisevorrichtung der Ladestation, die mit dem bereits aufgeladenen Elektrofahrzeug verbunden ist, von diesem getrennt und diese Ladestation von dem Benutzer an den Abstellplatz des hinzugekommenen Elektrofahrzeugs transportiert, um dort den Ladevorgang zu starten. Wenn der Transportweg auf der Transportschiene durch die Ladestation des Elektrofahrzeugs blockiert ist, dessen Ladevorgang noch nicht abgeschlossen ist, so wird wie folgt vorgegangen:

Der Benutzer hängt die Ladestation aus der Transportschiene aus, nachdem die Einspeisevorrichtung von dem Elektrofahrzeug gelöst worden ist und befördert die Ladestation zu einem Abschnitt der Transportschiene, von der aus der Abstellplatz des hinzugekommenen Elektrofahrzeugs zu erreichen ist. Hierzu kann der Benutzer je nach Ausführungsform der mobilen Ladestation diese tragen oder auf dem Boden schieben, um einen geeigneten Abschnitt der Transportschiene zu erreichen, von dem aus der Abstellplatz des hinzugekommenen Elektrofahrzeugs erreicht werden kann, ohne eine bereits in die Transportschiene eingehängte Ladestation passieren zu müssen.

Für den Fall, dass auf der Transportschiene keine freie Ladestation zur Verfügung steht, das heißt eine Ladestation, die die Beendigung eines Ladevorgangs signalisiert, kann der Benutzer eine weitere Ladestation aus einem Magazin entnehmen.

Unter einem "Magazin" wird dabei ein Aufbewahrungsort des Parkplatzes für mehrere mobile Ladestationen verstanden, in dem Ladestationen, die gerade nicht benötigt werden, deponiert werden können.

Nach einer Ausführungsform der Erfindung hat jede der mobilen Ladestationen Signalerzeugungsmittel, wie zum Beispiel eine Kontrollleuchte oder ein Display, um die Beendigung eines Ladevorgangs zu signalisieren. Dies ermöglicht es einem Benutzer zu erkennen, ob eine mit einem Elektrofahrzeug verbundene Ladestation frei ist, sodass dem Benutzer der Weg zu dem Magazin zur Entnahme einer weiteren Ladestation erspart bleiben kann. Dies hat den weiteren Vorteil, dass die Anzahl der in dem Magazin zu deponierenden Ladestationen klein gehalten werden kann.

Im Weiteren werden Ausführungsformen der Erfindung mit Bezug auf die Zeichnungen näher erläutert. Es zeigen:
- Figur 1: eine Ausführungsform eines erfindungsgemäßen Ladesystems mit mehreren mobilen Ladestationen,
- Figur 2: eine Ausführungsform einer Transportschiene mit separaten Stromschienen,
- Figur 3: eine Ausführungsform eines erfindungsgemäßen Parkplatzes.

Elemente der nachfolgenden Ausführungsformen, die sich einander entsprechen oder gleichen, sind jeweils mit denselben Bezugszeichen gekennzeichnet.

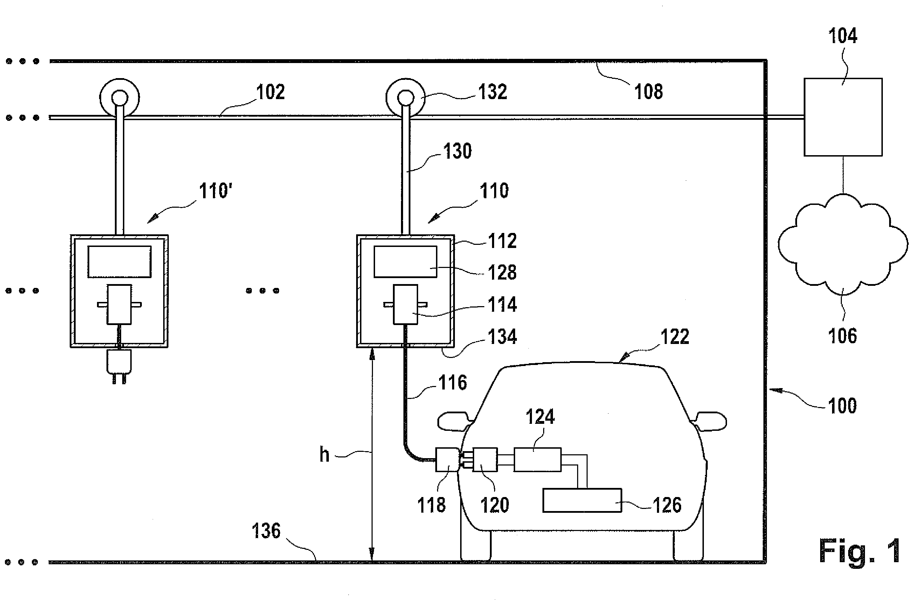

Die Figur 1 zeigt einen Parkplatz für Kraftfahrzeuge, zum Beispiel in einem Parkhaus 100. In dem Parkhaus 100 können Kraftfahrzeuge, insbesondere Personenkraftwagen (Pkw), mit Verbrennungsmotor oder Elektroantrieb parken, wobei der prozentuale Anteil der Pkw mit Elektroantrieb, das heißt der Elektrofahrzeuge, sowie die Parkpositionen der Elektrofahrzeuge in dem Parkhaus 100 nicht von vorneherein festgelegt ist.

Hierzu sind in dem Parkhaus ein oder mehrere Transportschienen 102 über Kopf angeordnet. Beispielsweise ist die Transportschiene 102 mit einer externen stationären Spannungsquelle 104 elektrisch verbunden. Die Spannungsquelle 104 ist ihrerseits mit dem elektrischen Energieversorgungsnetz 106 verbunden.

Die Transportschiene 102 ist zum Beispiel an der Decke 108 des Parkhaus 100 oder einer anderen geeigneten Halterung befestigt und verläuft entlang der in dem Parkhaus 100 vorgesehenen Parkplätze. Die Transportschiene 102 dient zum Einhängen von mehreren mobilen Ladestationen, von denen hier exemplarisch eine mobile Ladestation 110 und eine baugleiche mobile Ladestation 110' gezeigt sind.

Die mobile Ladestation 110 ist pendelförmig ausgebildet und hat an ihrem unteren Ende ein Gehäuse 112 mit einer Kabeltrommel 114, zur Aufnahme eines Kabels 116, an dessen Ende ein Stecker 118 zur Verbindung mit einem Anschluss 120 eines Elektrofahrzeugs 122 angeordnet ist.

Das Elektrofahrzeug beinhaltet ein Ladegerät 124 für eine Batterie 126, welche aufgeladen werden soll, während das Elektrofahrzeug 122 in dem Parkhaus 100 geparkt ist. Das Ladegerät 124 kann alternativ integraler Bestandteil der mobilen Ladestation 110 sein, so dass die mobile Ladestation 110 unmittelbar an die Batterie 126 anschließbar ist.

Die mobile Ladestation 110 beinhaltet ferner ein Elektronikmodul 128, in dem verschiedene Funktionalitäten für die Überwachung und/oder Steuerung- und/oder Regelung und/oder Vergebührung des Ladevorgangs realisiert sein können. Insbesondere können das Elektrofahrzeug 122 und die mobile Ladestation 110 gemäß WO 2010/145971 A1 ausgebildet sein, deren Offenbarungsgehalt hiermit voll umfänglich zum Gegenstand der vorliegenden Patentanmeldung gemacht wird. Dies ermöglicht insbesondere eine bequeme, sichere und genaue Vergebührung des aus dem Energieversorgungsnetz 106 entnommenen Ladestroms.

Insbesondere kann das Elektronikmodul Signalübertragungsmittel zur Ermöglichung einer Signalübertragung über die Einspeisevorrichtung und die Anschlussvorrichtung aufweisen, um insbesondere eine Kommunikationsverbindung zur Prüfung der Authentizität des Benutzers und/oder zur Vergebührung aufzubauen. Die Signalübertragungsmittel können für eine PLC Kommunikation ausgebildet sein.

Die mobile Ladestation 110 hat einen Vorsprung 130, wie zum Beispiel eine Stange, an dessen oberen Ende eine Transportrolle 132 angeordnet ist. Die Transportrolle 132 kann auf die Transportschiene 102 aufgesetzt werden, sodass die mobile Ladestation 110 an der Transportschiene 102 hängt und entlang der Transportschiene 102 von einem Benutzer oder robotisch bequem verschoben werden kann.

Bei der hier betrachteten Ausführungsform ist die Transportrolle 132 elektrisch leitend ausgebildet, sodass der Ladestrom von der Spannungsquelle 104 über die Transportschiene 102, die Transportrolle 132, ein in dem Vorsprung 130 befindliches Kabel sowie das Kabel 116 zu der Batterie 126 fließen kann.

Vorzugsweise hat die mobile Ladestation 110 ein Gewicht von maximal 10 kg, vorzugsweise maximal 5 kg, sodass ein Benutzer die mobile Ladestation 110 ohne nennenswerte Anstrengung innerhalb des Parkhauses 100 von einer Transportschiene 102 zu einer anderen Transportschiene tragen kann oder auch von einem Magazin, in dem mehrere der mobilen Ladestationen 110 vorrätig gehalten werden, zu einer der Transportschienen 102.

Die mobile Ladestation 110 ist vorzugsweise so ausgebildet, dass zwischen einer Unterseite 134 des Gehäuses und der Fahrbahnoberfläche 136 des Parkhaus 100 eine Höhe h von mindestens 1,40 m und höchstens 1,80 m besteht, sodass ein Benutzer bequem den Stecker 180 aus der Unterseite 134 des Gehäuses 112 der mobilen Ladestation 110 ziehen kann, um diesen in den Anschluss 120 zu stecken. Alternativ kann dies von einem zusätzlichen Automaten, d.h. einem Roboter, durchgeführt werden, oder die mobile Ladestation beinhaltet einen solchen Automaten als integralen Bestandteil.

Bei dem Benutzer kann es sich z.B. um den Fahrer des Fahrzeugs oder um einen Dienstleister handeln. Beispielsweise kann das Aufladen des Fahrzeugs beim Einstellen in ein Parkhaus mit zu dem Dienstleistungsangebot des Betreibers des Parkhauses gehören.

Das Elektrofahrzeug 122 kann zum Anschluss an eine übliche Netzspannung ausgebildet sein. Die Spannungsquelle 104 ist zur Abgabe dieser Netzspannung ausgebildet, sodass kein Transformator in der mobilen Ladestation 110 vorhanden zu sein braucht. Dies ist besonders vorteilhaft, um ein geringes Gewicht der mobilen Ladestation 110 zu realisieren.

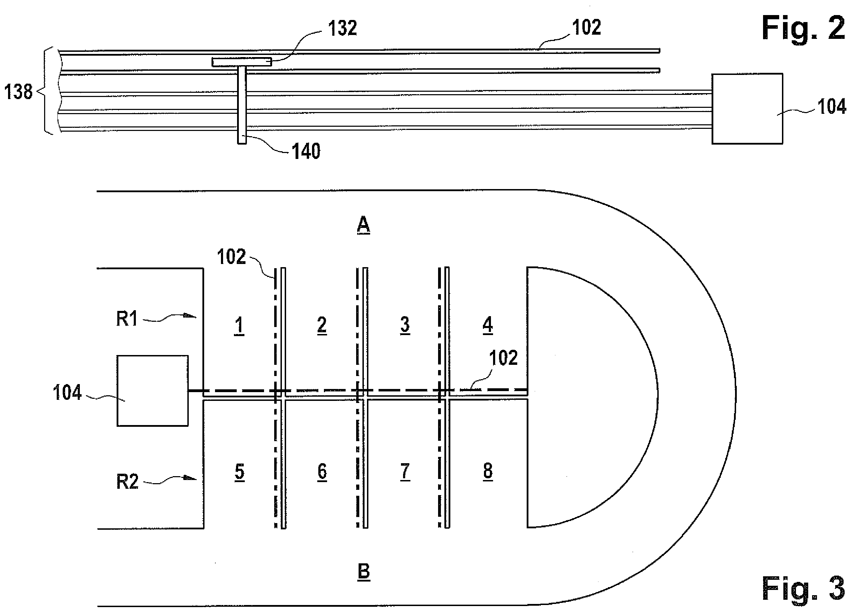

Die Figur 2 zeigt eine alternative Ausführungsform, bei der neben der Transportschiene 102 separate Stromschienen 138 angeordnet sind. An dem Vorsprung 130 befindet sich hier ein Kontaktelement 140 zur Kontaktierung der Stromschienen 138.

Diese Ausführungsform ist besonders vorteilhaft, da bei einer wachsenden Anzahl von Elektrofahrzeugen der Strombedarf für die entsprechenden Ladeströme entsprechend steigt, woraufhin weitere Stromschienen nachträglich ergänzt werden können.

Die Figur 3 zeigt schematisch einen Parkplatz mit zwei Reihen R1 bzw. R2 von Abstellplätzen. Die Reihe 1 hat die Abstellplätze 1 bis 4 und die Reihe 2 die Abstellplätze 5 bis 8. Die Reihen R1 und R2 sind aufeinanderstoßend angeordnet, so dass die Reihe 1 über den Zufahrtsweg A und die Reihe 2 über den Zufahrtsweg B, der parallel zu A verläuft, zu erreichen sind.

Zwischen den Reihen R1 und R2 ist dort, wo diese Reihen aufeinanderstoßen, die Transportschiene 102 angeordnet, wie es in der Figur 3 mit der gestrichelten Linie dargestellt ist. Zusätzlich kann die Transportschiene 102 Verästelungen haben, die zwischen die Abstellplätze der verschiedenen Reihen hineinragen; diese sind in der Figur 3 mit Strichpunkten dargestellt.

### Bezugszeichenliste

- 100: Parkhaus
- 102: Transportschienen
- 104: Spannungsquelle
- 106: elektrisches Energieversorgungsnetz
- 108: Decke
- 110: mobile Ladestation
- 112: Gehäuse
- 114: Kabeltrommel
- 116: Kabel
- 118: Stecker
- 120: Anschluss
- 122: Elektrofahrzeug
- 124: Ladegerät
- 126: Batterie
- 128: Elektronikmodul
- 130: Vorsprung
- 132: Transportrolle
- 134: Unterseite
- 136: Fahrbahnoberfläche
- 138: Stromschiene
- 140: Kontaktelement

## Patentansprüche

1. Ladesystem für Kraftfahrzeuge oder Wasserfahrzeuge mit Elektroantrieb mit mehreren mobilen Ladestationen für je ein Fahrzeug (122),
wobei jede der Ladestationen folgendes umfasst:
- eine Anschlussvorrichtung (130, 132) zum Anschluss an eine externe Spannungsquelle (104),
- eine Einspeisevorrichtung (114, 116, 118) zur Einspeisung von elektrischer Energie in eine Batterie (126) des Elektrofahrzeugs zur Durchführung eines Ladevorgangs,
- ein Elektronikmodul (128) zur Überwachung und/oder Steuerung und/oder Regelung und/oder Vergebührung des Ladevorgangs,
- Transportmittel (132) zum Transport der mobilen Ladestation entlang einer Transportschiene zu dem Elektrofahrzeug,
wobei die Transportschiene (102) oberhalb mehrerer Abstellplätze eines Parkplatzes verläuft, **dadurch gekennzeichnet, dass** die Transportschiene als Stromschiene ausgebildet ist, und in die mehrere der mobilen Ladestationen einhängbar sind, und wobei die Transportmittel zum Ein- und Aushängen der mobilen Ladestation in die zumindest eine Transportschiene ausgebildet sind, wobei die Transportmittel eine Transportrolle (132) aufweisen.

2. Ladesystem nach Anspruch 1, wobei die Transportmittel zum Einhängen an eine über Kopf angeordnete Transportschiene (102) ausgebildet sind.

3. Ladesystem nach Anspruch 2, wobei die Anschlussvorrichtung ein elektrisches Kontaktelement (132) zur Aufnahme der Spannung aufweist, wobei das Kontaktelement an den Transportmitteln zur Kontaktierung der Transportschiene und/oder einer Stromschiene ausgebildet ist.

4. Ladesystem nach Anspruch 3, wobei die Transportrolle das elektrische Kontaktelement bildet.

5. Ladesystem nach Anspruch 2, 3 oder 4, mit einem Gehäuse (112), an dem ein Vorsprung (130) angeordnet ist, dessen Ende zum Einhängen in die Transportschiene ausgebildet ist, wobei der Vorsprung vorzugsweise durch eine Stange gebildet wird, die bei eingehängter Ladestation in vertikaler Richtung verläuft, wobei der Abstand in vertikaler Richtung von der Unterseite des Gehäuses einer in die Transportschiene eingehängten mobilen Ladestation bis zu dem Parkplatz vorzugsweise mindestens 1,40 m beträgt.

6. Ladesystem nach Anspruch 5, wobei die Einspeisevorrichtung eine Kabeltrommel (114) mit einem Stromkabel (116) zur Verbindung mit dem Elektrofahrzeug aufweist, wobei das Kabel aus einer Unterseite (134) des Gehäuses herausziehbar ist.

7. Ladesystem nach einem der Ansprüche 2 bis 6, wobei das Gewicht der mobilen Ladestation höchstens 10 kg, vorzugsweise höchstens 5 kg beträgt, und mit einem Magazin zur Aufbewahrung mehrerer der Ladestationen zur Entnahme einer Ladestation durch einen Benutzer.

8. Ladesystem nach einem der vorhergehenden Ansprüche, wobei das Elektronikmodul Signalübertragungsmittel zur Ermöglichung einer Signalübertragung über die Einspeisevorrichtung und die Anschlussvorrichtung aufweist.

9. Ladesystem nach Anspruch 1, wobei die Transportmittel als Wagen oder Karre ausgebildet sind, welchen eine Person zu dem Elektrofahrzeug schieben oder ziehen kann.

10. Ladesystem nach einem der vorhergehenden Ansprüche, wobei die Ladestationen pendelförmig ausgebildet sind.

11. Ladesystem nach einem der vorhergehenden Ansprüche 6 bis 10, wobei eine Drehachse der Kabeltrommel durch einen Schwerpunkt der Ladestation verläuft.

12. Ladesystem nach einem der vorhergehenden Ansprüche, wobei die Transportschienen als Stromschienen ausgebildet sind oder wobei neben den Transportschienen jeweils ein oder mehrere Stromschienen angeordnet sind, wobei an den Transportmitteln ein Kontaktelement (140) zur Kontaktierung der neben einer der Transportschienen angeordneten Stromschienen angeordnet ist.

13. Parkplatz mit einem Ladesystem für Elektrofahrzeuge nach einem der vorhergehenden Ansprüche, wobei die Abstellplätze in mindestens zwei aufeinanderstoßenden Reihen (R1, R2) angeordnet sind, und die Transportschiene so angeordnet ist, dass sie zwischen den aneinanderstoßenden Reihen verläuft.

14. Verfahren zum Laden von Elektrofahrzeugen mit einem Ladesystem nach einem der vorhergehenden Ansprüche 1 bis 12 auf einem Parkplatz, der mehrere Abstellplätze aufweist, über die zumindest eine Transportschiene des Ladesystems verläuft, wobei sich auf einem ersten Abstellplatz ein erstes Elektrofahrzeug befindet, welches mit einer ersten der mobilen Ladestationen verbunden ist, um das erste Elektrofahrzeug aufzuladen, und wobei sich auf einem zweiten Abstellplatz ein zweites Elektrofahrzeug befindet, das mit einer zweiten der mobilen Ladestationen verbunden ist, und wobei der Ladevorgang des zweiten Elektrofahrzeugs abgeschlossen ist, was durch die zweite mobile Ladestation einem Benutzer signalisiert wird, mit folgenden Schritten:
- Abstellen eines dritten Elektrofahrzeugs auf einem freien Abstellplatz des Parkplatzes,
- Trennung der Einspeisevorrichtung der zweiten Ladestation von dem zweiten Elektrofahrzeug,
- Aushängen der zweiten Ladestation aus der Transportschiene,
- Beförderung der zweiten Ladestation durch einen Benutzer zu einem Abschnitt der Transportschiene von der aus der dritte Abstellplatz erreichbar ist, ohne den ersten Abstellplatz zu passieren,
- Einhängen der zweiten Ladestation in den Abschnitt der Transportschiene,
- Transport der zweiten Ladestation entlang der Transportschiene zu dem dritten Abstellplatz,
- Verbindung der Einspeisevorrichtung der zweiten Ladestation mit dem dritten Elektrofahrzeug, um den Ladevorgang zu starten.

15. Verfahren nach Anspruch 14, mit folgenden weiteren Schritten:
- Abstellen eines vierten Elektrofahrzeugs auf einem vierten Abstellplatz des Parkplatzes, wobei die Ladevorgänge der ersten und dritten Elektrofahrzeuge noch nicht abgeschlossen sind,
- Entnahme einer dritten Ladestation aus einem Magazin,
- Beförderung der dritten Ladestation von dem Magazin zu einem weiteren Abschnitt der Transportschiene, von dem aus der vierte Abstellplatz erreichbar ist, ohne die ersten und dritten Abstellplätze zu passieren,
- Einhängen der dritten Ladestation in den weiteren Abschnitt der Transportschiene,
- Transport der dritten Ladestation entlang der Transportschiene zu dem vierten Abstellplatz
- Verbindung der Einspeisevorrichtung der dritten Ladestation mit dem vierten Elektrofahrzeug, um den Ladevorgang zu starten.

## Claims

1. A charging system for motor vehicles or watercraft having an electric drive, said charging system comprising a plurality of mobile charging stations each intended for a vehicle (122),
wherein each of the charging stations comprises the following:
- a terminal device (130, 132) for connection to an external voltage source (104),
- a feed device (114, 116, 118) for feeding electrical energy into a battery (126) of the electric vehicle for carrying out a charging operation,
- an electronics module (128) for monitoring and/or controlling and/or regulating and/or billing the charging operation,
- transport means (132) for transporting the mobile charging station along a transport rail to the electric vehicle,
wherein the transport rail (102) runs above a plurality of parking spaces of a parking area, **characterised in that** the transport rail is designed as a current bar, wherein the plurality of mobile charging stations can be mounted thereon, and wherein the transport means are designed such that the mobile charging station can be mounted on and removed from the at least one transport rail, wherein the transport means comprise a transport roller (132).

2. The charging system according to claim 1, wherein the transport means are designed for mounting on a transport rail (102) arranged overhead.

3. The charging system according to claim 2, wherein the terminal device comprises an electrical contact element (132) for receiving the voltage, wherein the contact element is formed on the transport means for contacting the transport rail and/or a busbar.

4. The charging system according to claim 3, wherein the transport roller forms the electrical contact element.

5. The charging system according to claim 2, 3 or 4, with a housing (112), on which a protrusion (130) is arranged, the end of which is designed to be mounted on the transport rail, wherein the protrusion is preferably formed by a bar which runs in a vertical direction when the charging station is in the mounted state, wherein the distance in the vertical direction from the underside of the housing of a mobile charging station mounted on the transport rail to the parking space is preferably at least 1.40 m.

6. The charging system according to claim 5, wherein the feed device comprises a cable drum (114) with a power cable (116) for connection to the electric vehicle, wherein the cable can be unplugged from an underside (134) of the housing.

7. The charging system according to any one of claims 2 to 6, wherein the weight of the mobile charging station is at most 10 kg, preferably at most 5 kg, and comprising a magazine for storing a plurality of the charging stations for removal of a charging station by a user.

8. The charging system according to any one of the preceding claims, wherein the electronics module comprises signal transmission means for enabling a signal transmission via the feed device and the terminal device.

9. The charging system according to claim 1, wherein the transport means are designed as a trolley or cart, which a person can push or pull to the electric vehicle.

10. The charging system according to any one of the preceding claims, wherein the charging stations are pendulum-like.

11. The charging system according to any one of preceding claims 6 to 10, wherein an axis of rotation of the cable drum runs through a centre of gravity of the charging station.

12. The charging system according to any one of the preceding claims, wherein the transport rails are designed as busbars, or wherein one or more busbars is/are arranged next to each of the transport rails, wherein a contact element (140) for contacting the busbar(s) arranged next to one of the transport rails is arranged on the transport means.

13. A parking area with a charging system for electric vehicles according to any one of the preceding claims, wherein the parking spaces are arranged in at least two adjacent rows (R1, R2), and the transport rail is arranged such that it runs between the adjacent rows.

14. A method for charging electric vehicles with a charging system according to any one of preceding claims 1 to 12 in a parking area comprising a plurality of parking spaces, above which at least one transport rail of the charging system runs, wherein a first electric vehicle is located in a first parking space and is connected to a first of the mobile charging stations in order to charge the first electric vehicle, and wherein a second electric vehicle is located in a second parking space and is connected to a second of the mobile charging stations, and wherein the charging operation of the second electric vehicle is concluded, this being signalled to a user by the second mobile charging station, said method comprising the following steps:
- parking a third electric vehicle in a free parking space of the parking area,
- disconnecting the feed device of the second charging station from the second electric vehicle,
- removing the second charging station from the transport rail,
- transporting the second charging station by a user to a portion of the transport rail from which the third parking space can be reached, without passing the first parking space,
- mounting the second charging station on the portion of the transport rail,
- transporting the second charging station along the transport rail to the third parking space,
- connecting the feed device of the second charging station to the third electric vehicle in order to start the charging operation.

15. The method according to claim 14, comprising the following further steps:
- parking a fourth vehicle in a fourth parking space of the parking area, wherein the charging operations of the first and third electric vehicles are not yet concluded,
- removing a third charging station from a magazine,
- conveying the third charging station from the magazine to a further portion of the transport rail from which the fourth parking space can be reached, without passing the first and third parking spaces,
- mounting the third charging station on the further portion of the transport rail,
- transporting the third charging station along the transport rail to the fourth parking space,
- connecting the feed device of the third charging station to the fourth electric vehicle in order to start the charging operation.

## Revendications

1. Système de charge pour véhicules à moteurs ou bateaux avec un entraînement électrique avec plusieurs stations de charge mobiles pour chaque fois un véhicule (122),
où chacune des stations de charge comprend ce qui suit :
- un dispositif de branchement (130, 132) pour le branchement à une source de courant (104) externe,
- un dispositif d'alimentation (114, 116, 118) pour l'alimentation d'énergie électrique dans une batterie (126) du véhicule électrique en vue de l'exécution d'une opération de charge,
- un module électronique (128) pour la surveillance, et/ou la commande, et/ou la régulation, et/ou la facturation de l'opération de charge,
- des moyens de transport (132) pour le transport de la station de charge mobile le long d'un rail de transport vers le véhicule électrique,
où le rail de transport (102) s'étend au dessus de plusieurs emplacements de stationnement d'un parking, **caractérisé en ce que**
le rail de transport est conçu sous la forme d'un rail de courant, et dans lequel plusieurs stations de charge mobiles peuvent être accrochées, et
où les moyens de transport sont conçus pour l'accrochage et le décrochage de la station de charge mobile dans l'au moins un rail de transport, où les moyens de transport présentent un rouleau de transport (132).

2. Système de charge selon la revendication 1, dans lequel les moyens de transport sont conçus pour l'accrochage à un rail de transport (102) disposé en haut orienté vers le bas.

3. Système de charge selon la revendication 2, dans lequel le dispositif de branchement présente un élément de contact (132) électrique pour l'admission du courant, où l'élément de contact sur les moyens de transport est conçu pour la mise en contact du rail de transport et/ou d'un rail de courant.

4. Système de charge selon la revendication 3, dans lequel le rouleau de transport forme l'élément de contact électrique.

5. Système de charge selon les revendications 2, 3 ou 4, doté d'un boîtier (112) sur lequel il y a une protubérance (130), dont l'extrémité est conçue pour un accrochage dans le rail de transport, où la protubérance est formée de préférence par une tige qui s'étend en direction verticale lorsque la station de charge est accrochée, où la distance, dans la direction verticale, à partir du côté inférieur du boîtier d'une station de charge mobile accrochée dans le rail de transport jusqu'au parking est de préférence d'au moins 1,40 m.

6. Système de charge selon la revendication 5, dans lequel le dispositif d'alimentation présente un enrouleur de câble (114) avec un câble électrique (116) pour la connexion avec le véhicule électrique, où le câble peut être déroulé à partir d'un côté inférieur (134) du boîtier.

7. Système de charge selon l'une des revendications 2 à 6, dans lequel le poids de la station de charge mobile est d'au maximum 10 kg, de préférence, au maximum 5 kg, et doté d'un magasin pour le stockage de plusieurs parmi les stations de charge pour le prélèvement d'une station de charge par un utilisateur.

8. Système de charge selon l'une des revendications précédentes, dans lequel le module électronique présente des moyens de transmission de signaux pour permettre une transmission de signal par le biais du dispositif d'alimentation et du dispositif de branchement.

9. Système de charge selon la revendication 1, dans lequel les moyens de transport sont conçus sous forme de voiture ou de chariot, laquelle (lequel) peut être poussé(e) ou tracté(e) par une personne jusqu'au véhicule électrique.

10. Système de charge selon l'une des revendications précédentes, dans lequel les stations de charge sont conçues en forme de balanciers.

11. Système de charge selon l'une des revendications précédentes 6 à 10, dans lequel un axe de rotation de l'enrouleur de câble passe par un centre de gravité de la station de charge.

12. Système de charge selon l'une des revendications précédentes, dans lequel les rails de transport sont conçus sous forme de rails de courant et où, à côté des rails de transport, sont disposés respectivement un ou plusieurs rails de courant, où un élément de contact (140) est disposé sur les moyens de transport pour la mise en contact des rails de courant disposés à côté de l'un des rails de transport.

13. Parking avec un système de charge pour des véhicules électriques selon l'une des revendications précédentes, où les emplacements de stationnement sont agencés en au moins deux rangées (R1, R2) contigües, et le rail de transport est disposé de telle manière qu'il s'étend entre les rangées contigües.

14. Procédé de charge de véhicules électriques avec un système de charge selon l'une des revendications précédentes 1 à 12 sur un parking qui présente plusieurs emplacements de stationnement, au-dessus desquels s'étend au moins un rail de transport du système de charge, où un premier véhicule électrique, lequel est connecté avec une première parmi les stations de charge mobiles, se trouve sur un premier emplacement de stationnement, afin de recharger le premier véhicule électrique, et où un deuxième véhicule électrique, qui est connecté avec une deuxième parmi les stations de charge mobiles, se trouve sur un deuxième emplacement de stationnement, et où l'opération de charge du deuxième véhicule électrique est terminé, ce qui est signalé à un utilisateur par la deuxième station de charge mobile, avec les étapes suivantes :
- garage d'un troisième véhicule électrique sur un emplacement de stationnement libre du parking,
- séparation du dispositif d'alimentation de la deuxième station de charge du deuxième véhicule électrique,
- décrochage de la deuxième station de charge du rail de transport,
- transport de la deuxième station de charge par un utilisateur vers une section du rail de transport à partir de laquelle le troisième emplacement de stationnement est accessible sans passer par le premier emplacement de stationnement,
- accrochage de la deuxième station de charge dans la section du rail de transport,
- transport de la deuxième station de charge le long du rail de transport vers le troisième emplacement de stationnement,
- connexion du dispositif d'alimentation de la deuxième station de charge avec le troisième véhicule électrique, afin de démarrer l'opération de charge.

15. Procédé selon la revendication 14, avec les autres étapes suivantes :
- garage d'un quatrième véhicule électrique sur un quatrième emplacement de stationnement du parking, les opérations de charge des premier et troisième véhicules électriques n'étant pas encore terminées,
- prélèvement d'une troisième station de charge à partir d'un magasin,
- transport de la troisième station de charge du magasin vers une autre section du rail de transport à partir de laquelle le quatrième emplacement de stationnement est accessible, sans passer par les premier et troisième emplacements de stationnement,
- accrochage de la troisième station de charge dans l'autre section du rail de transport,
- transport de la troisième station de charge le long du rail de transport vers le quatrième emplacement de stationnement
- connexion du dispositif d'alimentation de la troisième station de charge avec le quatrième véhicule électrique afin de démarrer l'opération de charge.
